# EUROPEAN PATENT SPECIFICATION

(11) **EP 4 046 786 B1**
(45) Date of publication and mention of the grant of the patent: **20.11.2024**
(21) Application number: 20877018.0
(22) Date of filing: 07.08.2020
(51) Int. Cl.: C08F 212/08, C08F 297/06, C08F 236/06, C08F 210/02

(54) **MOLDED PRODUCT AND METHOD FOR MANUFACTURING MOLDED PRODUCT**
FORMPRODUKT UND VERFAHREN ZUR HERSTELLUNG EINES FORMPRODUKTS
PRODUIT MOULÉ ET PROCÉDÉ DE FABRICATION D'UN PRODUIT MOULÉ

(30) Priority: 18.10.2019 JP 2019190721
(43) Date of publication of application: 24.08.2022
(73) Proprietor: BRIDGESTONE CORPORATION, Chuo-ku Tokyo 104-8340 (JP)
(72) Inventor: YAMAGATA, Yusuke, Tokyo 104-8340 (JP); TAKANO, Shigenaga, Tokyo 104-8340 (JP); YOSHIDA, Masaki, Tokyo 104-8340 (JP); KOTANI, Kyohei, Tokyo 104-8340 (JP)
(74) Representative: Marks & Clerk LLP
(86) International application number: PCT/JP2020/030499
(87) International publication number: WO 2021/075132

(56) References cited:
- EP-A1- 0 891 997
- EP-A1- 3 363 838
- EP-A1- 4 046 785
- JP-A- H1 135 766
- DATABASE WPI Week 200654, Derwent World Patents Index; AN 2006-525217, XP002807939

## Description

### TECHNICAL FIELD

This disclosure relates to a shaped product and a method of manufacturing a shaped product.

### BACKGROUND

A copolymer obtained by using at least a conjugated diene compound and a non-conjugated olefin compound as monomers and polymerizing them in the presence of a predetermined catalyst, for example, has been known as a rubber material excellent in various properties including durability (WO/2015/190072 (PTL 1)).
EP 0891997 A1 (PTL2) relates to fluoropolymer compositions and processes for their manufacture.

### CITATION LIST

### Patent Literature

PTL 1: WO/20 15/190072
PTL 2: EP 0891997 A1

### SUMMARY

### (Technical Problem)

A common method of manufacturing a shaped product using the above-described diene-based rubber material includes appropriately blending the rubber-based material with, if necessary, a filler, a vulcanizing agent such as sulfur, a vulcanization accelerator, and the like, uniformly kneading them with a kneader to obtain a rubber composition, and then heating the rubber composition under certain conditions. Therefore, the shaped product obtained with such a method has substantially uniform physical properties including hardness throughout the product.

On the other hand, from the viewpoint of application to various uses, it is required to develop a rubber shaped product having different hardness in different parts, particularly a rubber shaped product having continuously changing hardness.

For example, a method is considered in response to such requirements where multiple intermediate shaped products having different hardness are prepared by, for example, changing the composition of rubber composition, and adhering and integrating the intermediate shaped products by any means to obtain a shaped product. However, a seam (joint) is inevitably formed in the shaped product obtained with this method, so that cracks may occur in the joint, which is unpreferable from the viewpoint of appearance.

It could thus be helpful to provide a shaped product in which hardness is different in each part and the occurrence of cracks is suppressed. It is also helpful to provide a method of manufacturing a shaped product with which such a shaped product can be manufactured.

### (Solution to Problem)

We thus provide the following.

That is, the shaped product of the present disclosure is made of a copolymer having a crystalline portion and an elastomer portion, where hardness differs between any two points, and the shaped product has no seam. The copolymer is two or more types of copolymers having different molecular structures or properties from each other. The hardness is determined in accordance with JIS K 6253-3 (type A durometer).

The method of manufacturing a shaped product of the present disclosure is a method of manufacturing the above shaped product, including
a process where two or more types of copolymers having a crystalline portion and an elastomer portion and having different molecular structures or properties from each other are used, and two or more members made of each copolymer are brought into contact with each other to obtain a contacted member,
a process of heating the contacted member to melt the crystalline portion, and
a process of cooling the contacted member after heating to obtain a seamless shaped product.

### (Advantageous Effect)

According to the present disclosure, it is possible to provide a shaped product in which hardness is different in each part and the occurrence of cracks is suppressed. Further, according to the present disclosure, it is possible to provide a method of manufacturing a shaped product with which such a shaped product can be manufactured.

### BRIEF DESCRIPTION OF THE DRAWINGS

In the accompanying drawings:

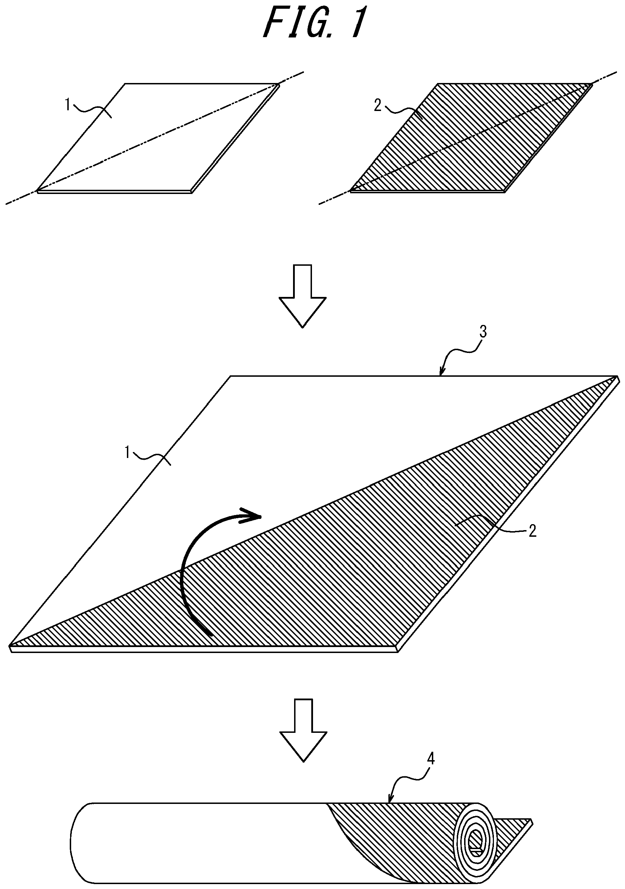

FIG. 1 schematically illustrates an example of a contacting process in a method of manufacturing a shaped product of one embodiment of the present disclosure.

### DETAILED DESCRIPTION

The following describes the shaped product and the method of manufacturing a shaped product of the present disclosure in detail based on embodiments.

### (Shaped product)

A shaped product of one embodiment of the present disclosure (hereinafter, may be referred to as "shaped product of the present embodiment") does not have a seam that may be served as a starting point of cracks, so that occurrence of cracks is suppressed, and the durability is excellent during long-term use. Further, the shaped product of the present embodiment is made of a copolymer having a crystalline portion and an elastomer portion. In the present embodiment, it is possible to prepare the above-described shaped product having no seam and having different hardness in each part by using a copolymer having a crystalline portion and an elastomer portion.

In the present specification, the presence of the "crystalline portion" in the copolymer can be recognized when the melting point is confirmed in the measurement of the copolymer by a differential scanning calorimetry (DSC) in accordance with JIS K 7121-1987.

In the present specification, the presence of the "elastomer portion" in the copolymer can be recognized when the copolymer exhibits rubber elasticity.

In the present specification, it can be recognized that no "seam" is present in the shaped product when an atomic force microscope (AFM) image of an arbitrary cross section of the shaped product is the same as an AFM image of a cross section of a shaped product integrally shaped using a single copolymer.

The copolymer of the shaped product of the present embodiment is two or more types of copolymers having a crystalline portion and an elastomer portion and having different molecular structures or properties (composition of monomer units; ratio between the crystalline portion and the elastomer portion; distribution of the crystalline portion and the elastomer portion in the polymer chain; crystallinity; etc.) from each other. By using such two or more types of copolymers, it is possible to easily prepare a shaped product having different hardness in each part.

For example, in the copolymer, the crystalline portion is relatively hard, and the elastomer portion is relatively soft. Therefore, by changing the ratio between the crystalline portion and the elastomer portion of the copolymer at any location of the shaped product, the hardness at any location of the shaped product can be changed.

Further, in the copolymer, a location where the chain length of the crystalline portion is long is relatively hard, and a location where the chain length of the crystalline portion is short is relatively soft. Additionally, a location having a large amount of crystalline portion is relatively hard, and a location having a small amount of crystalline portion is relatively soft. Therefore, by changing the distribution of the crystalline portion and the elastomer portion of the copolymer at any location of the shaped product, the hardness at any location of the shaped product can be changed.

Furthermore, in the copolymer, a location having a high crystallinity is relatively hard, and a location having a low crystallinity is relatively soft. Therefore, by changing the crystallinity of the copolymer at any location of the shaped product, the hardness at any location of the shaped product can be changed.

The crystalline portions of the two or more types of copolymers (two or more different types of copolymers) preferably contain the same monomer unit. This can provide an effect of melting and integrating the crystalline portion of each copolymer. Further, the elastomer portions of the two or more types of copolymers preferably contain the same monomer unit. This can further improve the durability of the shaped product.

In the shaped product of the present embodiment, the difference in hardness between any two points at intervals of 5 cm is preferably 3 to 50. When the difference is 3 or more, the effect of the hardness difference can be sufficiently obtained. When the difference is 50 or less, the occurrence of cracks due to rigidity difference can be avoided. The hardness can be measured with the method described in the Examples section. Such a shaped product can be obtained, for example, by appropriately selecting the type of copolymer to be used in the method of manufacturing a shaped product described later. The hardness is a value measured in accordance with JIS K 6253-3 (type A durometer).

The shaped product of the present embodiment preferably has no location where the hardness changes in a stepped manner. Further, in the shaped product of the present embodiment, the hardness preferably gradually increases or decreases along a line connecting any two points. This can further suppress the occurrence of cracks and deterioration of durability. Such a shaped product can be obtained, for example, by optimizing the contacted member to be heated in the method of manufacturing a shaped product described later.

The shaped product of the present embodiment can be manufactured, for example, with the method of manufacturing a shaped product of one embodiment described later, or can be manufactured by using, for example, a 3D printer.

The shaped product of the present embodiment can be widely applied to, for example, rubber articles such as tires, conveyor belts, hoses, rubber crawlers, seismic isolation devices and anti-vibration devices, and resin articles such as body parts, transportation infrastructure parts (road poles, guardrails, etc.) and medical supplies, which is not particularly limited thereto.

### <Copolymer having crystalline portion and elastomer portion>

Next, the copolymer used in the present embodiment will be described. The copolymer has a crystalline portion and an elastomer portion. Further, in the present embodiment, two or more types of copolymers having a crystalline portion and an elastomer portion and having different molecular structures or properties (composition of monomer units; ratio between the crystalline portion and the elastomer portion; distribution of the crystalline portion and the elastomer portion in the polymer chain; crystallinity; etc.) from each other are used, as described above. Note that in the present specification, the embodiment in which "the composition of monomer units is different from each other" includes, for example, an embodiment in which the types of the monomer units constituting the copolymer are the same but their proportions in the copolymer are different.

The copolymer may be a copolymer in which at least a part (for example, terminal) of a polymer chain has been modified by a coupling reaction or the like.

The copolymer preferably contains a conjugated diene unit (a monomer unit derived from a conjugated diene compound). The conjugated diene unit in the copolymer mainly contributes to the formation of an elastomer portion. Because an elastomer portion containing a conjugated diene unit is soft, it can be easily used to reduce the hardness of any location of the shaped product. Note that the conjugated diene unit in the copolymer may contribute to the formation of an elastomer portion or the formation of a crystalline portion depending on the chain structure. For example, a conjugated diene unit having a trans structure in the copolymer may contribute to the formation of a crystalline portion.

The conjugated diene compound as a monomer of the copolymer preferably has 4 to 8 carbon atoms. Specific examples of the conjugated diene compound include 1,3-butadiene, isoprene, 1,3-pentadiene, and 2,3-dimethyl-1,3-butadiene. The conjugated diene compound may be used alone or in combination of two or more. From the viewpoint of forming a good elastomer portion in the copolymer, it is preferable that the conjugated diene compound as a monomer of the copolymer contain 1,3-butadiene and/or isoprene, it is more preferable that the conjugated diene compound consist only of 1,3-butadiene and/or isoprene, and it is still more preferable that the conjugated diene compound consist only of 1,3-butadiene. In other words, it is preferable that the conjugated diene unit in the copolymer contain a 1,3-butadiene unit (hereinafter, may be simply referred to as "butadiene unit") and/or an isoprene unit, it is more preferable that the conjugated diene compound consist only of a 1,3-butadiene unit and/or an isoprene unit, and it is still more preferable that the conjugated diene compound consist only of a butadiene unit.

In the copolymer, the cis-1,4 bond content of the conjugated diene unit is preferably 50 % or more and 100 % or less. When the cis-1,4 bond content is 50 % or more, it can act softly as an elastomer portion. Note that the cis-1,4 bond content is a proportion in the whole conjugated diene unit, not a proportion in the whole copolymer.

In the copolymer, the trans-1,4 bond content of the conjugated diene unit is preferably 50 % or more and 100 % or less. When the trans-1,4 bond content is 50 % or more, it can act hard as a crystalline portion. Note that the trans-1,4 bond content is a proportion in the whole conjugated diene unit, not a proportion in the whole copolymer.

It is preferable that the copolymer is two types of copolymers (first copolymer and second copolymer) having different molecular structures or properties from each other, and that, when both the first copolymer and the second copolymer contain a conjugated diene unit, the difference between the proportion (mol%) of the conjugated diene unit in the first copolymer and the proportion (mol%) of the conjugated diene unit in the second copolymer be 10 mol% or more. This can sufficiently increase the hardness difference between any two points of the shaped product. From the same viewpoint, the difference is more preferably 20 mol% or more and further preferably 25 mol% or more. On the other hand, from the viewpoint of suppressing deterioration of the durability of the shaped product due to an excessively large difference in hardness, the difference is preferably 60 mol% or less, more preferably 55 mol% or less, further preferably 50 mol% or less, still more preferably 45 mol% or less, and particularly preferably 40 mol% or less.

The copolymer preferably contains a non-conjugated olefin unit (a monomer unit derived from a non-conjugated olefin compound). The non-conjugated olefin unit in the copolymer mainly contributes to the formation of a crystalline portion. Because a crystalline portion containing a non-conjugated olefin unit is hard, it can be easily used to increase the hardness of any location of the shaped product. Note that the non-conjugated olefin unit in the copolymer may contribute to the formation of a crystalline portion or the formation of an elastomer portion depending on the chain structure.

When the copolymer is two or more types of copolymers having different molecular structures or properties from each other, it is preferable that the crystalline portions in the two or more types of copolymers contain the same monomer unit. As a result, the crystalline portion of each copolymer can be more reliably melted and integrated, and the occurrence of cracks can be significantly suppressed. Further, the monomer unit in the crystalline portion is preferably a non-conjugated olefin unit and more preferably an ethylene unit (a monomer unit derived from ethylene).

The non-conjugated olefin compound as a monomer of the copolymer preferably has 2 to 10 carbon atoms. Specific examples of the non-conjugated olefin compound include α-olefins such as ethylene, propylene, 1-butene, 1-pentene, 1-hexene, 1-heptene and 1-octene, and heteroatom-substituted alkene compounds such as vinyl pivalate, 1-phenylthioethene and N-vinylpyrrolidone. The non-conjugated olefin compound may be used alone or in combination of two or more. From the viewpoint of forming a good crystalline portion in the copolymer, the non-conjugated olefin compound as a monomer of the copolymer is preferably an acyclic non-conjugated olefin compound, where the acyclic non-conjugated olefin compound is more preferably α-olefin and still more preferably α-olefin containing ethylene, and it particularly preferably consists only of ethylene. In other words, the non-conjugated olefin unit in the copolymer is preferably an acyclic non-conjugated olefin unit, where the acyclic non-conjugated olefin unit is more preferably an α-olefin unit and still more preferably an α-olefin unit containing an ethylene unit, and it particularly preferably consists only of an ethylene unit.

It is preferable that the copolymer is two types of copolymers (first copolymer and second copolymer) having different molecular structures or properties from each other, and that, when both the first copolymer and the second copolymer contain a non-conjugated olefin unit, the difference between the proportion (mol%) of the non-conjugated olefin unit in the first copolymer and the proportion (mol%) of the non-conjugated olefin unit in the second copolymer be 10 mol% or more. This can sufficiently increase the hardness difference between any two points of the shaped product. From the same viewpoint, the difference is more preferably 20 mol% or more and further preferably 25 mol% or more. On the other hand, from the viewpoint of suppressing deterioration of the durability of the shaped product due to an excessively large difference in hardness, the difference is preferably 65 mol% or less, more preferably 60 mol% or less, further preferably 55 mol% or less, still more preferably 50 mol% or less, and particularly preferably 45 mol% or less.

The polystyrene-equivalent weight-average molecular weight (Mw) of the copolymer is preferably 10,000 to 10,000,000, more preferably 100,000 to 9,000,000, and still more preferably 150,000 to 8,000,000. When the Mw of the copolymer is 10,000 or more, sufficient mechanical strength can be secured. When the Mw is 10,000,000 or less, high workability can be maintained.

The polystyrene-equivalent number-average molecular weight (Mn) of the copolymer is preferably 10,000 to 10,000,000, more preferably 50,000 to 9,000,000, and still more preferably 100,000 to 8,000,000. When the Mn of the copolymer is 10,000 or more, sufficient mechanical strength can be secured. When the Mn is 10,000,000 or less, high workability can be maintained.

The molecular weight distribution [Mw/Mn (weight average molecular weight/number average molecular weight)] of the copolymer is preferably 1.00 to 4.00. When the molecular weight distribution of the copolymer is 4.00 or less, the physical properties of the copolymer can obtain sufficient homogeneity. From the same viewpoint, the molecular weight distribution of the copolymer is more preferably 3.50 or less and still more preferably 3.00 or less. Further, the molecular weight distribution of the copolymer is more preferably 1.50 or more and still more preferably 1.80 or more.

The above-described weight average molecular weight (Mw), number average molecular weight (Mn) and molecular weight distribution (Mw/Mn) are determined by gel permeation chromatography (GPC) with polystyrene as a standard substance.

The melting point of the copolymer measured by a differential scanning calorimeter (DSC) is preferably 30 °C or higher. The melting point is preferably 180 °C or lower. When the melting point of the copolymer is 30 °C or higher, the crystallinity of the copolymer is high, and the crack resistance is further improved. When the melting point of the copolymer is 180 °C or lower, it is unnecessary to excessively raise the heating temperature during heating, which further improves the workability. From the same viewpoint, the melting point of the copolymer is more preferably 140 °C or lower. In a case where there are two or more melting points, the highest melting point is adopted.

The endothermic peak energy of the copolymer measured by a differential scanning calorimeter (DSC) at 0 °C to 150 °C is preferably 1 J/g or more. The endothermic peak energy is preferably 150 J/g or less. When the endothermic peak energy of the copolymer is 1 J/g or more, the crystallinity of the copolymer is high, and the crack resistance is further improved. When the endothermic peak energy of the copolymer is 150 J/g or less, the workability is further improved. From the same viewpoint, the endothermic peak energy of the copolymer is more preferably 10 J/g or more. The endothermic peak energy of the copolymer is more preferably 120 J/g or less.

The above-described endothermic peak energy refers to the endothermic peak energy at 0 °C to 150 °C when the temperature is raised from -150 °C to 150 °C at a heating rate of 10 °C/min in accordance with JIS K 7121-1987 using a differential scanning calorimeter.

The glass transition temperature (Tg) of the copolymer measured by a differential scanning calorimeter (DSC) is preferably 0 °C or lower and more preferably -100 °C to -10 °C. When the glass transition temperature of the copolymer is 0 °C or lower, the workability is further improved.

The crystallinity (ΔH1/ΔH0 × 100) of the copolymer is preferably 0.5 % or more. The crystallinity is preferably 50 % or less. When the crystallinity of the copolymer is 0.5 % or more, the crystallinity due to the non-conjugated olefin unit is sufficiently secured, and the crack resistance is further improved. When the crystallinity of the copolymer is 50 % or less, the workability during kneading or the like is improved, and the tackiness of the copolymer is improved. As a result, when rubber products such as tires are produced by sticking shaped bodies prepared with the copolymer to each other, the workability is improved. From the same viewpoint, the crystallinity of the copolymer is more preferably 1 % or more and still more preferably 1.5 % or more. The crystallinity of the copolymer is still more preferably 45 % or less.

In the present specification, the crystallinity of the copolymer is a ratio (ΔH1/ΔH0 × 100) of the endothermic peak energy (ΔH1) of the copolymer with respect to the crystal melting energy (ΔH0) of polyethylene measured by a differential scanning calorimeter (DSC).

When two types of copolymers (first copolymer and second copolymer) having different crystallinities are used, the difference between the crystallinity (%) of the first copolymer and the crystallinity (%) of the second copolymer is preferably 3 % or more. This can sufficiently increase the hardness difference between any two points of the obtained shaped product. From the same viewpoint, the difference is more preferably 5 % or more and still more preferably 10 % or more. On the other hand, from the viewpoint of suppressing deterioration of the durability of the shaped product due to an excessively large difference in hardness, the difference is preferably 60 % or less, more preferably 50 % or less, further preferably 40 % or less, still more preferably 30 % or less, even more preferably 25 % or less, and particularly preferably 20 % or less.

The above-described physical properties such as melting point, glass transition temperature, and crystallinity can be measured with the methods described in the Examples section.

Examples of the copolymer include a binary copolymer containing a conjugated diene unit and a non-conjugated olefin unit (hereinafter, may be simply referred to as "binary copolymer"). Examples of the binary copolymer and a method of manufacturing the same include those described in WO/2012/014459.

The proportion of the conjugated diene unit in the binary copolymer is preferably more than 0 mol% and 70 mol % or less. In this case, it is possible to obtain a copolymer having excellent elongation and weather resistance. From the same viewpoint, the proportion of the conjugated diene unit in the binary copolymer is more preferably 60 mol% or less, further preferably 50 mol% or less, and still more preferably 40 mol% or less.

In the binary copolymer, the proportion of 1,2 adducts (including 3,4 adducts) of the conjugated diene unit is preferably 5 % or less. When the proportion is 5 % or less, the heat resistance and flex fatigue resistance of the copolymer can be further improved. From the same viewpoint, the proportion of 1,2 adducts (including 3,4 adducts) of the conjugated diene unit in the binary copolymer is more preferably 2.5 % or less and still more preferably 1.0 % or less. The proportion of 1,2 adducts (including 3,4 adducts) of the conjugated diene unit is a proportion in the whole conjugated diene unit, not a proportion in the whole copolymer. Note that when the conjugated diene unit is a butadiene unit, the above proportion has the same meaning as a 1,2-vinyl bond content.

The proportion of the non-conjugated olefin unit in the binary copolymer is preferably 30 mol% or more and less than 100 mol%. In this case, the breaking resistance at high temperatures can be effectively improved. From the same viewpoint, the proportion of the non-conjugated olefin unit in the binary copolymer is more preferably 40 mol% or more, further preferably 50 mol% or more, and still more preferably 60 mol% or more.

In the present embodiment, the copolymer preferably contains an aromatic vinyl unit (a monomer unit derived from an aromatic vinyl compound). When the copolymer contains an aromatic vinyl unit, the breaking resistance of the copolymer itself and thus the breaking resistance of the shaped product can be improved. Further, when the copolymer is two or more types of copolymers having different molecular structures or properties from each other, it is preferable that at least one type of the copolymers contain an aromatic vinyl unit, and it is more preferable that all of the copolymers contain an aromatic vinyl unit. The aromatic vinyl unit in the copolymer may contribute to the formation of a crystalline portion or the formation of an elastomer portion depending on the chain structure.

The aromatic vinyl compound as a monomer of the copolymer preferably has 8 to 10 carbon atoms. Specific examples of the aromatic vinyl compound include styrene, o-methylstyrene, m-methylstyrene, p-methylstyrene, o,p-dimethylstyrene, o-ethylstyrene, m-ethylstyrene, and p-ethylstyrene. The aromatic vinyl compound may be used alone or in combination of two or more. The aromatic vinyl compound as a monomer of the copolymer preferably contains styrene and more preferably consists only of styrene. In other words, the aromatic vinyl unit in the copolymer preferably contains a styrene unit and more preferably consists only of a styrene unit.

Note that the aromatic ring in the aromatic vinyl unit is not included in the main chain of the copolymer unless it is bonded to an adjacent unit.

As used herein, examples of the copolymer include a multipolymer containing at least a conjugated diene unit, a non-conjugated olefin unit, and an aromatic vinyl unit (hereinafter, may be simply referred to as "multipolymer"). Note that the multipolymer may consist only of a conjugated diene unit, a non-conjugated olefin unit and an aromatic vinyl unit or may further contain other monomer units.

The proportion of the conjugated diene unit in the multipolymer is preferably 1 mol% or more. The proportion of the conjugated diene unit in the multipolymer is preferably 60 mol% or less. When the proportion is 1 mol% or more, a copolymer having excellent elongation can be obtained, which is preferable. When the proportion is 60 mol% or less, the weather resistance is excellent. From the same viewpoint, the proportion of the conjugated diene unit in the multipolymer is more preferably 3 mol% or more, further preferably 5 mol% or more, and particularly preferably 8 mol% or more. The proportion of the conjugated diene unit in the multipolymer is more preferably 55 mol% or less, further preferably 50 mol% or less, and still more preferably 45 mol% or less.

The proportion of the non-conjugated olefin unit in the multipolymer is preferably 30 mol% or more. The proportion of the non-conjugated olefin unit is preferably 97 mol% or less. When the proportion is 30 mol% or more, the proportion of the conjugated diene unit or the aromatic vinyl unit is thereby reduced, the weather resistance is improved, and the fracture resistance (especially the rupture strength (Tb)) at high temperatures is increased. When the proportion is 97 mol% or less, the proportion of the conjugated diene unit or the aromatic vinyl unit is thereby increased, and the fracture resistance (especially the elongation after fracture (Eb)) at high temperatures is improved. From the same viewpoint, the proportion of the non-conjugated olefin unit in the multipolymer is more preferably 35 mol% or more and still more preferably 38 mol% or more. The proportion of the non-conjugated olefin unit is more preferably 95 mol% or less and still more preferably 90 mol% or less.

The proportion of the aromatic vinyl unit in the multipolymer is preferably 2 mol% or more. The proportion of the aromatic vinyl unit is preferably 35 mol% or less. When the proportion is 2 mol% or more, the fracture resistance at high temperatures is improved. When the proportion is 35 mol% or less, the effects of the conjugated diene unit and the non-conjugated olefin unit become remarkable. From the same viewpoint, the proportion of the aromatic vinyl unit in the multipolymer is more preferably 3 mol% or more and still more preferably 5 mol% or more. The proportion of the aromatic vinyl unit in the multipolymer is more preferably 30 mol% or less, further preferably 25 mol% or less, still more preferably 20 mol% or less, and particularly preferably 17 mol% or less.

The multipolymer may have other constituent units other than the conjugated diene unit, the non-conjugated olefin unit, and the aromatic vinyl unit. However, from the viewpoint of obtaining a desired effect, the proportion of the other constituent units is preferably 30 mol% or less, more preferably 20 mol% or less, and still more preferably 10 mol% or less of the total of the multipolymer. It is particularly preferable that no other constituent unit be contained, that is, the proportion be 0 mol%.

In the binary copolymer or the multipolymer, the content of a butylene unit is preferably 0 mol%. That is, it is preferable not to contain hydrogenated product of a styrene-butadiene copolymer, such as polymers obtained by hydrogenation of butadiene and styrene-ethylene/butylene-styrene copolymers (SEBS).

In other words, the copolymer preferably contains the conjugated diene unit and the non-conjugated olefin unit, where the proportion of a butylene unit is 0 mol%.

Further, the copolymer preferably contains the conjugated diene unit, the non-conjugated olefin unit, and the aromatic vinyl unit, where the proportion of a butylene unit is 0 mol%.

From the viewpoint of obtaining good crack resistance, weather resistance and crystallinity, the multipolymer is preferably a polymer obtained by polymerizing at least one type of conjugated diene compound, one type of non-conjugated olefin compound, and one type of aromatic vinyl compound as monomers. In other words, the multipolymer is preferably a multipolymer containing one type of conjugated diene unit, one type of non-conjugated olefin unit, and one type of aromatic vinyl unit, it is more preferably a ternary copolymer consisting only of one type of conjugated diene unit, one type of non-conjugated olefin unit, and one type of aromatic vinyl unit, and it is still more preferably a ternary copolymer consisting only of a butadiene unit, an ethylene unit, and a styrene unit. As used herein, "one type of conjugated diene unit" includes conjugated diene units having different binding modes. For example, even if the copolymer contains a cis-1,4-bonded butadiene unit and a trans-1,4-bonded butadiene unit, the copolymer is considered to contain one type of conjugated diene unit.

The multipolymer preferably has a proportion of conjugated diene unit of 1 mol% to 60 mol%, a proportion of non-conjugated olefin unit of 30 mol% to 97 mol%, and a proportion of aromatic vinyl unit of 2 mol% to 35 mol%. In this case, the crack resistance of the copolymer is further improved, and the weather resistance is also improved.

The main chain of the multipolymer preferably consists only of an acyclic structure. This can further improve the crack growth resistance. NMR is used as a main measuring means for confirming whether the main chain of the copolymer has a cyclic structure. Specifically, when no peak derived from a cyclic structure (such as a peak appears at 10 ppm to 24 ppm in a ¹³C-NMR spectrum chart of a three-membered ring to a five-membered ring) is observed in the main chain, it means that the main chain of the copolymer consists only of an acyclic structure.

The multipolymer can be produced by a polymerization process using a conjugated diene compound, a non-conjugated olefin compound, and an aromatic vinyl compound as monomers, and other processes such as a coupling process and a cleaning process may be further included if necessary.

During the production of the multipolymer, it is preferable to add only the non-conjugated olefin compound and the aromatic vinyl compound without adding the conjugated diene compound in the presence of a catalyst and polymerize them. Because the conjugated diene compound has higher reactivity than the non-conjugated olefin compound and the aromatic vinyl compound, especially when the catalyst component described later is used, it tends to be difficult to polymerize the non-conjugated olefin compound and/or the aromatic vinyl compound in the presence of the conjugated diene compound. It also tends to be difficult due to the properties of the catalyst to polymerize the conjugated diene compound first and then additionally polymerize the non-conjugated olefin compound and the aromatic vinyl compound.

The polymerization method may be any method such as a solution polymerization method, a suspension polymerization method, a liquid phase bulk polymerization method, an emulsion polymerization method, a gas phase polymerization method, and a solid phase polymerization method. When a solvent is used in the polymerization reaction, the solvent may be any one that is inactive in the polymerization reaction, and examples thereof include toluene, cyclohexane, and normal hexane.

The polymerization process may be performed in one step or in multiple steps of two or more steps. A one-step polymerization process is a process in which all types of monomers to be polymerized are reacted and polymerized at the same time, where the monomers to be polymerized are a conjugated diene compound, a non-conjugated olefin compound, an aromatic vinyl compound and other monomers and are preferably a conjugated diene compound, a non-conjugated olefin compound and an aromatic vinyl compound. A multi-step polymerization process is a process in which a part or all of one or two types of monomers is reacted first to form a polymer (first polymerization step), and then one or more steps (second polymerization step to final polymerization step) are performed where the remaining types of monomers and the remainder of the above one or two types of monomers are added and polymerized to perform polymerization. In the production of a multipolymer, it is particularly preferable to perform the polymerization process in multiple steps.

In the polymerization process, the polymerization reaction is preferably performed in an atmosphere of an inert gas, preferably nitrogen gas or argon gas. The polymerization temperature of the polymerization reaction is not particularly limited. However, it is preferably in a range of -100 °C to 200 °C, for example, and it may be about room temperature. The pressure of the polymerization reaction is preferably in a range of 0.1 MPa to 10.0 MPa so that the conjugated diene compound can be sufficiently incorporated into the polymerization reaction system. The reaction time of the polymerization reaction is not particularly limited, and it is preferably in a range of 1 second to 10 days, for example. However, it can be appropriately selected depending on conditions such as the type of catalyst and the polymerization temperature. The polymerization process may be performed in one step or in multiple steps of two or more steps.

In the polymerization process of the conjugated diene compound, a polymerization terminator such as methanol, ethanol or isopropanol may be used to terminate the polymerization.

The polymerization process is preferably performed in multiple steps. It is more preferable to perform a first step of mixing a first monomer raw material containing at least an aromatic vinyl compound with a polymerization catalyst to obtain a polymerization mixture, and a second step of introducing a second monomer raw material containing at least one selected from the group consisting of a conjugated diene compound, a non-conjugated olefin compound and an aromatic vinyl compound into the polymerization mixture. It is still more preferable that the first monomer raw material contain no conjugated diene compound and that the second monomer raw material contain a conjugated diene compound.

The first monomer raw material used in the first step may contain a non-conjugated olefin compound together with an aromatic vinyl compound. The first monomer raw material may contain all or only a part of the aromatic vinyl compound to be used. The non-conjugated olefin compound is contained in at least one of the first monomer raw material and the second monomer raw material.

In the first step, the polymerization method for obtaining the polymerization mixture may be any method such as a solution polymerization method, a suspension polymerization method, a liquid phase bulk polymerization method, an emulsion polymerization method, a gas phase polymerization method, and a solid phase polymerization method. When a solvent is used in the polymerization reaction, the solvent may be any one that is inactive in the polymerization reaction, and examples thereof include toluene, cyclohexane, and normal hexane.

The second monomer raw material used in the second step is preferably only a conjugated diene compound, or a conjugated diene compound and a non-conjugated olefin compound, or a conjugated diene compound and an aromatic vinyl compound, or a conjugated diene compound, a non-conjugated olefin compound and an aromatic vinyl compound.

When the second monomer raw material contains at least one selected from the group consisting of a non-conjugated olefin compound and an aromatic vinyl compound in addition to a conjugated diene compound, these monomer raw materials may be previously mixed with a solvent or the like and then introduced into the polymerization mixture, or each monomer raw material may be introduced into the polymerization mixture one by one. Further, these monomer raw materials may be added at the same time or sequentially. In the second step, the method for introducing the second monomer raw material into the polymerization mixture is not particularly limited, but it is preferable to control the flow rate of each monomer raw material and continuously add them to the polymerization mixture (so-called metering). When a monomer raw material which is a gas under the conditions of the polymerization reaction system (such as ethylene as a non-conjugated olefin compound under the conditions of room temperature and normal pressure) is used, it can be introduced into the polymerization reaction system at a predetermined pressure.

The second step is preferably performed within a reactor in an atmosphere of an inert gas, preferably nitrogen gas or argon gas. The temperature (reaction temperature) in the second step is not particularly limited. However, it is preferably in a range of -100 °C to 200 °C, for example, and it may be about room temperature. Note that increasing the reaction temperature may reduce the selectivity of cis-1,4 bonds in a conjugated diene unit. The pressure in the second step is not particularly limited, but it is preferably in a range of 0.1 MPa to 10.0 MPa so that the monomers such as a conjugated diene compound can be sufficiently incorporated into the polymerization reaction system. The time (reaction time) required by the second step can be appropriately selected depending on conditions such as the type of polymerization catalyst and the reaction temperature, but it is preferably in a range of 0.1 hour to 10 days, for example.

In the second step, a polymerization terminator such as methanol, ethanol or isopropanol may be used to terminate the polymerization reaction.

The coupling process is a process of a reaction (coupling reaction) for modifying at least a part (for example, terminal) of the polymer chain of the multipolymer obtained in the polymerization process. In the coupling process, it is preferable to perform the coupling reaction when the polymerization reaction is 100 % completed.

A coupling agent used in the coupling reaction is not particularly limited and may be appropriately selected depending on the intended purpose. Examples thereof include a tin-containing compound such as bis (1-octadecyl maleate) dioctyltin (IV); an isocyanate compound such as 4,4'-diphenylmethane diisocyanate; and an alkoxysilane compound such as glycidylpropyltrimethoxysilane. These may be used alone or in combination of two or more. Among the above, the bis (1-octadecyl maleate) dioctyltin (IV) is preferable in terms of reaction efficiency and low gel formation. Note that the number average molecular weight (Mn) can be increased by performing a coupling reaction.

The cleaning process is a process of cleaning the multipolymer obtained in the polymerization process. A medium used for cleaning is not particularly limited and may be appropriately selected depending on the intended purpose. Examples thereof include methanol, ethanol, and isopropanol. When a catalyst derived from Lewis acid is used as the polymerization catalyst, these solvents may be added with an acid (such as hydrochloric acid, sulfuric acid, or nitric acid) and used. The amount of acid to be added is preferably 15 mol% or less with respect to the solvent. When the amount is more than this, the acid may remain in the copolymer, which may adversely affect the reaction during kneading and vulcanization.

The cleaning process can suitably reduce the amount of catalyst residue in the copolymer.

The polymerization process of the conjugated diene compound, the non-conjugated olefin compound and the aromatic vinyl compound preferably contains an operation of polymerizing various monomers in the presence of at least one of the following components (A) to (F) as catalyst components. In the polymerization process, it is preferable to use at least one of the following components (A) to (F), but it is more preferable to combine two or more of the following components (A) to (F) and use them as a catalyst composition.
Component (A): Rare earth element compound or reaction product of the rare earth element compound and Lewis base
Component (B): Organometallic compound
Component (C): Aluminoxane
Component (D): Ionic compound
Component (E): Halogen compound
Component (F): Cyclopentadiene skeleton-containing compound selected from substituted or unsubstituted cyclopentadiene (compound having a cyclopentadienyl group), substituted or unsubstituted indene (compound having an indenyl group), and substituted or unsubstituted fluorene (compound having a fluorenyl group).

The above components (A) to (F) can be used for polymerization by referring to, for example, WO/2018/092733.

### (Method of manufacturing shaped product)

The method of manufacturing a shaped product of an embodiment of the present disclosure (hereinafter, may be referred to as "the manufacturing method of the present embodiment") is a method of manufacturing the shaped product described above. The manufacturing method of the present embodiment includes a process (contacting process) where two or more types of copolymers having a crystalline portion and an elastomer portion and having different molecular structures or properties from each other are used, and two or more members made of each copolymer are brought into contact with each other to obtain a contacted member, a process (heating process) of heating the contacted member to melt the crystalline portion, and a process (cooling process) of cooling the contacted member after heating to obtain a seamless shaped product.

The manufacturing method of the present embodiment is not particularly limited, and it can be performed using, for example, a 3D printer.

As described above, the contacting process is a process where two or more types of copolymers having a crystalline portion and an elastomer portion and having different molecular structures or properties from each other are used, and two or more members made of each copolymer are brought into contact with each other.

FIG. 1 illustrates an example of the contacting process in the manufacturing method of the present embodiment. In the example, a sheet-shaped member 1 made of a first copolymer and a sheet-shaped member 2 made of a second copolymer are first prepared, respectively, as illustrated in the upper part of FIG. 1. Here, the first copolymer and the second copolymer both have a crystalline portion and an elastomer portion, but their molecular structures or properties are different from each other. After cutting the above two sheet-shaped members 1 and 2, the cut surfaces of the cut sheet-shaped member 1 made of the first copolymer and the cut sheet-shaped member 2 made of the second copolymer are brought into contact with each other to form one sheet-shaped contacted member 3, as illustrated in the middle part of FIG. 1. Next, the sheet-shaped contacted member 3 is heated as necessary and then wound into a rod shape (roll shape) as illustrated in the lower part of FIG 1. The obtained rod-shaped contacted member 4 then can be subjected to the heating process.

In a shaped product obtained by the heating process and the cooling process using the rod-shaped contacted member 4, one end has hardness substantially derived from the first copolymer, the hardness changes continuously (linearly) as it approaches the other end, and the other end has hardness substantially derived from the second copolymer. That is, the hardness of the shaped product differs between any two points, and the hardness gradually increases or decreases along a line connecting any two points.

Although rectangular sheet-shaped members 1 and 2 are prepared in FIG. 1, the shaping shape of the copolymer prepared in the contacting process is not particularly limited in the present embodiment.

Although the two rectangular sheet-shaped members 1 and 2 are cut along the diagonal line of the rectangle in FIG. 1, the cutting location is not particularly limited, and they may not be cut in the present embodiment.

Although the cut surfaces of the two sheet-shaped members 1 and 2 are used as the contacting point in FIG. 1, the contacting point is not particularly limited in the present embodiment. For example, two or more sheet-shaped members may be laminated and brought into contact with each other, or a plurality of sheet-shaped member pieces may be arranged on one sheet-shaped member and brought into contact with each other.

Although the contacted member to be subjected to the heating process is shaped like a rod in FIG. 1, the shaping shape of the contacted member to be subjected to the heating process is not particularly limited in the present embodiment.

In the present embodiment, the members 1 and 2 use copolymers having a crystalline portion and an elastomer portion but different from each other. However, a reinforcing filler such as carbon black or silica, an age resistor, a crosslinking agent such as sulfur, or the like may be appropriately blended as necessary in addition to the copolymers to prepare the member.

Next, the heating process is a process of heating the contacted member such as the contacted member 3 or the contacted member 4 described above. By this process, the crystalline portion in the contacted member (in the copolymer) is melted. The heating temperature during heating is preferably equal to or higher than the melting point of the two or more types of copolymers. As a result, the crystalline portion in the contacted member (in the copolymer) can be more sufficiently melted, and a seamless shaped product can be more reliably obtained. When the copolymer has two or more melting points, the heating temperature is preferably equal to or higher than the highest melting point of each copolymer. Further, the heating temperature is preferably 10 °C higher than the highest melting point of each copolymer or higher, and it is preferably 20 °C higher than the highest melting point of each copolymer or higher. More specifically, the heating temperature is preferably 130 °C or higher and more preferably 140 °C or higher. The upper limit of the heating temperature is not particularly limited, but it is preferably 250 °C or lower.

The heating time may be 3 minutes or longer and 60 minutes or shorter.

It is preferable to pressurize the contacted member as well when heating the contacted member (that is, the contact member is heated and pressurized). This facilitates the production of a shaped product having a desired shape. The pressure during the heating and pressurization may be 3 MPa to 7 MPa.

Next, the cooling process is a process of cooling the contacted member after heating to obtain a shaped product. By this process, the melted crystalline portion can be solidified, and seams (joints) can be eliminated. That is, the obtained shaped product has hardness different between any two points and has no seam. The cooling may be continued till the temperature reaches room temperature with a cooling means such as a cooling plate. The cooling time may be 3 minutes to 60 minutes.

In the manufacturing method of the present embodiment, the shaped product obtained after the cooling process may be heated again, further shaped into any shape such as a sheet shape, and cooled to obtain a shaped product.

### EXAMPLES

The following describes the present disclosure in more detail with reference to examples. Note that the present disclosure is not limited to the following examples, and that the present disclosure can be appropriately modified without changing the primary features.

### (Preparation of first copolymer)

First, 63 g of a cyclohexane solution containing 277 g of styrene and 15 g of butadiene was added to a 2000 mL stainless steel pressure-resistant reactor that had been sufficiently dried. Next, in a glove box under a nitrogen atmosphere, 0.299 mmol of mono(bis(1,3-tert-butyldimethylsilyl)indenyl)bis(bis(dimethylsilyl)amide) gadolinium complex 1,3-[(t-Bu)Me₂Si]₂C₉H₅Gd[N(SiHMe₂)₂], 0.329 mmol of dimethylanilinium tetrakis(pentafluorophenyl)borate [Me₂NHPhB(C₆F₅)₄], and 3.29 mmol of diisobutylaluminum hydride were charged into a glass container, and 115 mL of cyclohexane was added to prepare a catalytic solution. The catalyst solution was added to the stainless steel pressure-resistant reactor and heated to 70 °C. Next, ethylene was charged into the stainless steel pressure-resistant reactor at a pressure of 1.5 MPa, and 544 mL of a cyclohexane solution containing 135 g of 1,3-butadiene was further charged into the stainless steel pressure-resistant reactor over 267 minutes, and copolymerization was performed at 70 °C.

Next, 1 mL of an isopropanol solution of 5 mass% of 2,2'-methylene-bis(4-ethyl-6-t-butylphenol) (NS-5) was added to the stainless steel pressure-resistant reactor to terminate the reaction. Next, the copolymer was separated using a large amount of methanol and vacuum dried at 50 °C to obtain the copolymer. In this way, a first copolymer (ternary copolymer) containing a butadiene unit, an ethylene unit, and a styrene unit was prepared. It was confirmed that the first copolymer exhibited rubber elasticity.

### (Preparation of second copolymer)

A second copolymer (ternary copolymer) containing a butadiene unit, an ethylene unit, and a styrene unit was prepared in the same manner as in the preparation of the first copolymer except that the mono(bis(1,3-tertbutyldimethylsilyl)indenyl)bis(bis(dimethylsilyl)amide) gadolinium complex used to prepare the catalyst solution was replaced with mono(1-benzyldimethylsilyl-3-methylindenyl)bis(bis(dimethylsilyl)amide) gadolinium complex, the amount used was appropriately changed, and the amounts of various monomers used were appropriately changed. It was confirmed that the second copolymer exhibited rubber elasticity.

The following physical properties of the prepared copolymers were measured. The results are listed in Table 1.

### (1) Number average molecular weight (Mn), weight average molecular weight (Mw), and molecular weight distribution (Mw/Mn)

The polystyrene-equivalent number average molecular weight (Mn), weight average molecular weight (Mw), and molecular weight distribution (Mw/Mn) of the copolymer were determined by gel permeation chromatography [GPC: HLC-8121GPC/HT manufactured by Tosoh, column: GMHHR-H(S)HT × 2 manufactured by Tosoh, detector: differential refractometer (RI)] using monodisperse polystyrene as a reference. The measuring temperature was 40 °C.

### (2) Proportion of ethylene unit, styrene unit, and butadiene unit

The proportions (mol%) of the ethylene unit, the styrene unit, and the butadiene unit in the copolymer were determined from the integral ratio of each peak in the ¹H-NMR spectrum (100 °C, d-tetrachloroethane standard: 6 ppm).

### (3) Melting point (Tm)

The melting points (Tm 1, Tm2) of the copolymer were measured using a differential scanning calorimeter (DSC, manufactured by TA Instruments Japan, "DSCQ2000") in accordance with JIS K 7121-1987.

### (4) Glass transition temperature (Tg)

The glass transition temperature (Tg) of the copolymer was obtained using a differential scanning calorimeter (DSC, manufactured by TA Instruments Japan, "DSCQ2000") in accordance with JIS K 7121-1987.

### (5) Crystallinity

The copolymer sample was heated from -150 °C to 150 °C at 10 °C/min, and the endothermic peak energy (ΔH1) at 0 °C to 150 °C was measured. Further, the crystal melting energy (ΔH0) of polyethylene having 100% crystal component was measured in the same manner.

The crystallinity (%) derived from the ethylene unit (non-conjugated olefin unit) was calculated from a ratio (ΔH1/ΔH0 × 100) of the endothermic peak energy (ΔH1) of the copolymer with respect to the crystal melting energy (ΔH0) of polyethylene.

The endothermic peak energy of the copolymer sample and the crystal melting energy of polyethylene were measured by a differential scanning calorimeter (DSC, manufactured by TA Instruments Japan, "DSCQ2000").

### (6) Confirmation of acyclic structure of main chain

The structure of the main chain of the obtained copolymer was confirmed with the following method. Because no peak was observed at 10 ppm to 24 ppm in the ¹³C-NMR spectrum chart, it was confirmed that the obtained copolymer had only an acyclic structure in the main chain.

**Table 1**

| | Proportion of monomer unit (mol%) | | | Molecular weight | | | Physical property | | | |
|---|---|---|---|---|---|---|---|---|---|---|
| | Ethylene unit | Butadiene unit | Styrene unit | Mn (×10³) | Mw (×10³) | Mw/Mn | Crystallinity (%) | Melting point Tm1 (°C) | Melting point Tm2 (°C) | Tg (°C) |
| First copolymer (relatively soft) | 38 | 45 | 17 | 141 | 428 | 3 | 1.4 (0-100°C) | 43 | 123 | -54 |
| | | | | | | | 0.4 (100-150°C) | | | |
| Second copolymer (relatively hard) | 87 | 8 | 5 | 85 | 280 | 3.3 | 142 (0-100°C) | 50 | 115 | -30 |
| | | | | | | | 5.0 (100-150°C) | | | |

### (Preparation of shaped product)

A shaped product was prepared by the contacting process illustrated in FIG. 1. First, a first copolymer and a second copolymer were each shaped into a rectangular sheet of 300 mm × 300 mm × thickness of 1 mm. Next, each sheet (each member that had been formed into a sheet shape) was cut along the diagonal line of the rectangle according to a conventional method, and then the cut surfaces of the cut sheet of the first copolymer and the cut sheet of the second copolymer were brought into contact with each other to form one combined rectangular sheet (contacted member). Next, the combined rectangular sheet was heated at 160 °C for one minute and then wound into a rod shape. Next, the sheet was heated and pressurized using a metal mold at 180 °C and 5 MPa for 5 minutes or longer and then cooled to room temperature in 5 minutes using a cooling plate. In this way, a rod-shaped product (length 254 mm) was prepared.

The cross section of the prepared shaped product was observed with an atomic force microscope (AFM) image, and there was no difference from an AFM image of the cross section of a shaped product that had been shaped using a single copolymer. Therefore, it was confirmed that the prepared shaped product had no seams. Thus, the occurrence of cracks was suppressed in the prepared shaped product, and excellent durability was obtained.

Further, the hardness (point) at three locations of both ends and the center of the prepared rod-shaped product of 254 mm was measured using "CL-150" manufactured by ASKER in accordance with JIS K 6253-3 (type A durometer). As a result, the hardness was 94, 78, 67 (point) in the order from the end, and it was confirmed that the hardness gradually increased (decreased).

### INDUSTRIAL APPLICABILITY

According to the present disclosure, it is possible to provide a shaped product in which hardness is different in each part and the occurrence of cracks is suppressed. Further, according to the present disclosure, it is possible to provide a method of manufacturing a shaped product with which such a shaped product can be manufactured.

### REFERENCE SIGNS LIST

- 1, 2: member
- 3: sheet-shaped contacted member
- 4: rod-shaped contacted member

## Claims

1. A shaped product made of a copolymer having a crystalline portion and an elastomer portion, wherein hardness, which is determined in accordance with JIS K 6253-3 (type A durometer), differs between any two points, the shaped product has no seam and the copolymer is two or more types of copolymers having different molecular structures or properties from each other.

2. The shaped product according to claim 1, wherein the hardness gradually increases or decreases along a line connecting any two points.

3. The shaped product according to claim 1 or 2, wherein the crystalline portions of the two or more types of copolymers contain the same monomer unit, and the elastomeric portions of the two or more types of copolymers contain the same monomer unit.

4. The shaped product according to any one of claims 1 to 3, wherein the copolymer contains a non-conjugated olefin unit.

5. The shaped product according to any one of claims 1 to 4, wherein the copolymer contains a conjugated diene unit.

6. The shaped product according to any one of claims 1 to 5, wherein the copolymer contains a conjugated diene unit, a non-conjugated olefin unit, and 0 mol% of butylene unit.

7. The shaped product according to any one of claims 1 to 6, wherein the copolymer contains an aromatic vinyl unit.

8. The shaped product according to any one of claims 1 to 7, wherein the copolymer contains a conjugated diene unit, a non-conjugated olefin unit, an aromatic vinyl unit, and 0 mol% of butylene unit.

9. A method of manufacturing a shaped product, which is a method of manufacturing the shaped product according to any one of claims 1 to 8, comprising
a process where two or more types of copolymers having a crystalline portion and an elastomer portion and having different molecular structures or properties from each other are used, and two or more members made of each copolymer are brought into contact with each other to obtain a contacted member,
a process of heating the contacted member to melt the crystalline portion, and
a process of cooling the contacted member after heating to obtain a seamless shaped product.

## Patentansprüche

1. Gestaltetes Produkt, das aus einem Copolymer besteht, das einen kristallinen Teil und einen Elastomerteil aufweist, wobei eine Härte, die nach JIS K 6253-3 (Durometer Typ A) bestimmt ist, zwischen zwei beliebigen Punkten verschieden ist, das gestaltete Produkt keine Naht aufweist und sich das Copolymer aus zwei oder mehr Copolymertypen zusammensetzt, die voneinander verschiedene Molekularstrukturen oder Eigenschaften aufweisen.

2. Gestaltetes Produkt nach Anspruch 1, wobei die Härte einer Linie entlang, die zwei beliebige Punkte verbindet, allmählich zunimmt oder abnimmt.

3. Gestaltetes Produkt nach Anspruch 1 oder 2, wobei die kristallinen Teile der zwei oder mehr Copolymertypen dieselbe Monomereinheit enthalten, und die elastomeren Teile der zwei oder mehr Copolymertypen dieselbe Monomereinheit enthalten.

4. Gestaltetes Produkt nach einem der Ansprüche 1 bis 3, wobei das Copolymer eine nichtkonjugierte Olefineinheit enthält.

5. Gestaltetes Produkt nach einem der Ansprüche 1 bis 4, wobei das Copolymer eine konjugierte Dieneinheit enthält.

6. Gestaltetes Produkt nach einem der Ansprüche 1 bis 5, wobei das Copolymer eine konjugierte Dieneinheit, eine nichtkonjugierte Olefineinheit und 0 Mol-% einer Butyleneinheit enthält.

7. Gestaltetes Produkt nach einem der Ansprüche 1 bis 6, wobei das Copolymer eine aromatische Vinyleinheit enthält.

8. Gestaltetes Produkt nach einem der Ansprüche 1 bis 7, wobei das Copolymer eine konjugierte Dieneinheit, eine nichtkonjugierte Olefineinheit, eine aromatische Vinyleinheit und 0 Mol-% einer Butyleneinheit enthält.

9. Verfahren für das Herstellen eines gestalteten Produkts, das ein Verfahren für das Herstellen des gestalteten Produkts nach einem der Ansprüche 1 bis 8 ist, umfassend
einen Prozess, bei dem zwei oder mehr Copolymertypen, die einen kristallinen Teil und einen Elastomerteil aufweisen und voneinander verschiedene Molekularstrukturen oder Eigenschaften aufweisen, verwendet werden, und zwei oder mehr Elemente, die aus jedem Copolymer bestehen, miteinander in Kontakt gebracht werden, um ein kontaktiertes Element zu erhalten,
einen Prozess des Erhitzens des kontaktierten Elements, um den kristallinen Teil zu schmelzen, und
einen Prozess des Kühlens des kontaktierten Elements nach dem Erhitzen, um ein nahtloses gestaltetes Produkt zu erhalten.

## Revendications

1. Produit façonné constitué d'un copolymère présentant une partie cristalline et une partie élastomère, dans lequel une dureté, qui est déterminée selon la norme JIS K 6253-3 (duromètre de type A), diffère entre deux quelconques points, le produit façonné ne comporte aucun joint et le copolymère est composé de deux types de copolymères ou plus ayant différentes structures moléculaires ou propriétés l'un par rapport à l'autre.

2. Produit façonné selon la revendication 1, dans lequel la dureté augmente ou diminue progressivement le long d'une ligne reliant deux quelconques points.

3. Produit façonné selon la revendication 1 ou 2, dans lequel les parties cristallines des deux types de copolymères ou plus contiennent la même unité monomère, et les parties élastomères des deux types de copolymères ou plus contiennent la même unité monomère.

4. Produit façonné selon l'une quelconque des revendications 1 à 3, dans lequel le copolymère contient une unité oléfine non conjuguée.

5. Produit façonné selon l'une quelconque des revendications 1 à 4, dans lequel le copolymère contient une unité de diène conjugué.

6. Produit façonné selon l'une quelconque des revendications 1 à 5, dans lequel le copolymère contient une unité de diène conjugué, une unité d'oléfine non conjugué et 0 % en moles d'unité butylène.

7. Produit façonné selon l'une quelconque des revendications 1 à 6, dans lequel le copolymère contient une unité vinyle aromatique.

8. Produit façonné selon l'une quelconque des revendications 1 à 7, dans lequel le copolymère contient une unité de diène conjugué, une unité d'oléfine non conjugué, une unité de vinyle aromatique et 0 % en moles d'unité butylène.

9. Procédé de fabrication d'un produit façonné, qui est un procédé de fabrication du produit façonné selon l'une quelconque des revendications 1 à 8, comprenant
un processus où deux types de copolymères ou plus présentant une partie cristalline et une partie élastomère et ayant différentes structures moléculaires ou propriétés l'un par rapport à l'autre sont utilisés, et deux éléments ou plus constitués de chaque copolymère sont mis en contact l'un avec l'autre pour obtenir un élément mis en contact,
un processus de chauffage de l'élément mis en contact pour faire fondre la partie cristalline, et
un processus de refroidissement de l'élément mis en contact après le chauffage pour obtenir un produit façonné sans joint.
